# EUROPÄISCHE PATENTSCHRIFT

(11) **EP 2 813 446 B1**
(45) Veröffentlichungstag und Bekanntmachung des Hinweises auf die Patenterteilung: **29.07.2015**
(21) Anmeldenummer: 13171194.7
(22) Anmeldetag: 10.06.2013
(51) Int. Cl.: B65G 47/91

(54) **Vorrichtung und Verfahren zum Transport von plattenförmigen Gütern**
Device and method for transporting board-shaped goods
Dispositif et procédé destinés au transport de produits en forme de plaque

(43) Veröffentlichungstag der Anmeldung: 17.12.2014
(73) Patentinhaber: Magna Steyr Fuel Systems GesmbH, 8261 Sinabelkirchen (AT)
(72) Erfinder: Spary, Bernhard, 8302 Nestelbach bei Graz (AT)
(74) Vertreter: Rausch, Gabriele

(56) Entgegenhaltungen:
- EP-A1- 1 921 031
- DE-U1-202012 100 255
- US-A- 4 466 764
- US-A- 4 971 515
- US-A- 5 234 207
- US-A- 5 622 362

## Beschreibung

Die Erfindung geht aus von einer Vorrichtung zum Transport von plätten-förmigen Gütern bestehend aus einem Mittenträger mit daran angebrachten Greifarmen.

Weiterhin geht die Erfindung aus von einem Verfahren zum Transport von plattenförmigen Gütern unter Verwendung einer Vorrichtung, die die platten einfach aufnehmen kann.

### Stand der Technik

In den unterschiedlichsten Herstellungsanlagen in der Industrie werden plattenförmige Vorprodukte verwendet. Dabei handelt es sich beispielesweise um Metallplatten, die einer weiteren Verarbeitung, zum Beispiel einem Tiefziehverfahren oder einem Stanzprozess unterworfen werden. Weiterhin werden auch Kunststoffplatten verwendet, die bei unterschiedlichen Prozessen auch in vorgewärmter Form einer weiteren Umformung zugeführt werden. Um die Platten innerhalb eines Herstellungsprozesses zu transportieren und von Lagerstellen in Werkzeuge und daraus heraus zu bewegen, werden Vorrichtungen mit Greifarmen und Saugnäpfen verwendet.

Aus dem Stand der Technik beispielsweise der DE 60314777 T2 ist bekannt, eine pneumatische Greif- und Vakuum-Haltevorrichtung mit einer glockenförmigen Ausbildung zu verwenden. Dabei wird die zu transportierenden Platte durch das Vakuum in einer Vakuumkammer, die sich über die gesamte Oberfläche der Platte erstreckt, angesaugt. Eine solche Vakuum-Haltevorrichtung ist sinnvoll, wenn beispielsweise eine Kunststoffplatte bereits im gewärmten Zustand aufgenommen wird, da die Kunststoffplatte ansonsten zum Durchhängen neigt, und nicht sauber in ein Werkzeug eingelegt werden kann.

Die im Stand der Technik gezeigte Vakuum-Haltevorrichtung erfordert eine große Vakuumkammer, mit dem dazugehörigen Aufwand zum Herstellen des Unterdrucks. Je nach Größe der aufzunehmenden Platte ist dabei die Abdichtung der Ränder der Vakuum- Haltevorrichtung zur Platte ein Problem.

Beim Abheben einzelner Platten von einem Stapel kann es dabei vorkommen, dass eine zweite Platte an der Rückseite der ersten Platte haftet. Das passiert häufig im Fall leichter Kunststoffplatten. Die Ursache der

Haftung kann dabei Feuchtigkeit, Adhäsion, gewöhnliche Verunreinigungen, Elektrostatik oder einfach nur eine luftdichte Lage der beiden Platten relativ zueinander sein. Beim Abheben der ersten Platte wird dann eine weitere Platte oder sogar mehrere Platten mit angehoben.

Dies erzeugt ein Problem, da in weiteren Verarbeitungsprozess nur eine einzelne Platte in das Werkzeug eingefügt werden darf.

Aus der US5622362 ist eine Anordnung mit den Merkmalen des Oberbegriffs des Anspruchs 1 bekannt, bei der ein Sauggreifer verschwenkbar angeordnet ist und durch die Verschwenkbewegung die aufzunehmende Platte verbiegt. Der Sauggreifer besitzt selbst keine Messanordnung, sondern der Trennvorgang findet mit jeder Aufnahme statt. Dadurch kann bei empindlichen Platten ein Schaden entstehen.

Die US 4971515 zeigt eine Anordnung mit einer Messeinrichtung an einem Sauggreifer, die erkennt, wenn mehr als eine Platte aufgenommen wird. Es wird aber keine Trennung vorgenommen.

Es ist daher Aufgabe der Erfindung, eine Vorrichtung zur Aufnahme von plattenförmigen Gütern herzustellen, die in der Lage ist auf einfache Art und Weise und mit reduziertem Aufwand ein Vakuumaufnahmeverfahren zur Verfügung zu stellen und gleichzeitig überzählige, anhaftende Platten abzustreifen.

Diese Aufgabe wird gelöst mit den Merkmalen des Anspruchs 1.

Es ist dabei von Vorteil, dass die Vorrichtung zum Transport von plattenförmigen Gütern aus Greifarmen besteht, wobei die Greifarme jeweils einen mit Unterdruck zu beaufschlagenden Saugnapf tragen. Die Verwendung einzelner Saugnäpfe hat den Vorteil, dass nur kleine Vakuumräume hergestellt werden müssen. Weiterhin weist die Vorrichtung eine Mess- und Trennvorrichtung auf, die zum Abstreifen von anhaftenden Platten dient. Dadurch wird vermieden, dass in einem Herstellungsprozess mehr als die eine gewünschte Platte in einen nachfolgenden Prozessschritt, beispielsweise ein Werkzeug eingeführt wird.

Es ist weiterhin von Vorteil, dass mehrere Saugnäpfe an jeweils einem Greifarm angebracht werden. Dadurch ist es möglich auch eine durch Vorwärmen bereits flexible Kunststoffplatte so stützend aufzunehmen, dass sie nicht durchhängt.

Weiterhin ist es von Vorteil, wenn die Saugnäpfe verschiebbar entlang der Greifarme angebracht sind, da die Unterstützung der Platte gezielt eingestellt werden kann. Damit ist es möglich, beispielsweise eine Kunststoffplatte lokal zu erwärmen, und einen der erwärmten und daher plastisch verformbaren Stelle mehrere Saugnäpfe einzubringen um ein Durchhängen der Platte zu vermeiden. Die Vorrichtung wird durch diese Maßnahme besonders flexibel einsetzbar.

Vorteilhafterweise wird die Mess-und Trennvorrichtung an einem mittig angebrachten Greifarm befestigt. Dadurch kann sowohl die Messung als auch der Trennvorgang an einer zentralen Stelle erfolgen. Erfindungsgemäß weist die Mess-und Trennvorrichtung einen ersten und einen zweiten Schlitten mit verschiebbaren Backen auf. Die verschiebbaren Backen dienen dabei als Messbacken.

Erfindungsgemäß besitzt die zweite Backe einen Trennschieber, der im Ruhezustand in eine Ausnehmung der ersten Backe eingreift. Dadurch wird eine platzsparende Lösung für die Mess-Trenn Vorrichtung gefunden.

Das erfindungsgemäße Verfahren unter Verwendung der Vorrichtung findet vorteilhafterweise unter Verwendung der folgenden Schritte statt: Ansaugen einer oder mehrerer Platten während sich die Mess- und Trennvorrichtung im Ruhezustand befindet, vertikale Bewegung des zweiten Schlittens unter Öffnung eines Abstandes zwischen der ersten Backe und der zweiten Backe, horizontales Verfahren des zweiten Schlitten in Richtung auf die Platten, Abstreifen einer anhaftenden Platte, vertikales Schließen des Abstandes zwischen der ersten und der zweiten Backe, Messung der Dicke der Platte.

Mit dem erfindungsgemäßen Verfahren lässt sich auf einfache Art und Weise verhindern, dass eine Platte an der anzuhebenden Platte haften bleibt, wobei der Erfolg des Abstreifprozesses durch eine Dickenmessung überprüft wird.

### Beschreibung der Erfindung

Die Erfindung wird nachfolgend beispielhaft unter Bezugnahme auf die beigefügte Zeichnung beschrieben.
- Fig. 1: zeigt eine schematische Darstellung der beispielhaften Ausführungsform.
- Figur 2: zeigt einen Greifarm mit Saugnapf,
- Figur 3a und 3b: zeigt Details der Schlitten,
- Figur 4: zeigt einen Längsschnitt entlang der Schlitten im Ruhezustand
- Figur 5a bis Figur 5d: zeigen jeweils Längsschnitte der Schlitten in den unterschiedlichen Arbeitsschritten
- Figur 6: zeigt ein Ablaufdiagramm.

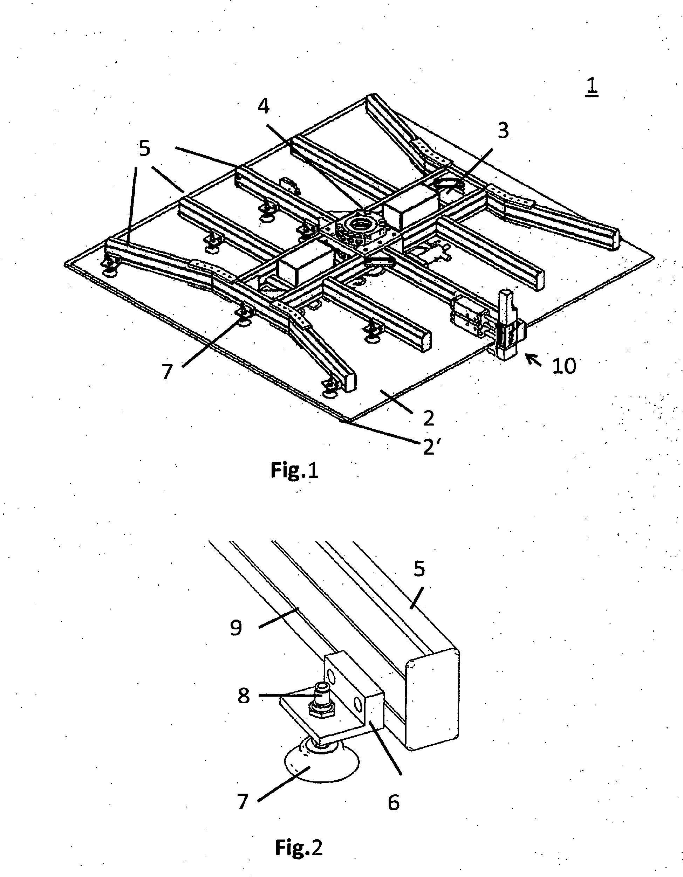

Figur 1 zeigt die erfindungsgemäße Transportvorrichtung 1, die eine erste Platte 2, sowie eine daran anhaftende zweite Platte 2' trägt. Die Transportvorrichtung besteht aus einem Mittenträger 3, von dem aus Greifarme 5 abgehen. Ungefähr in der Mitte des Mittenträgers liegt ein Adapter 4 zur Anbindung der Transportvorrichtung an ein Transportsystem der Produktionsanlage. Die Greifarme 5 sind in diesem Beispiel rechtwinklig zum Mittenträger 3 angeordnet, wobei die äußeren Greifarme an den jeweiligen Stirnseiten des Mittenträgers winklig angebracht sind. Die Ausrichtung der Greifarme bezüglich des Mittenträgers kann dabei den Anforderungen der Vorrichtung angepasst werden. An den Greifarmen 5 sind Saugnäpfe 7 montiert. Weitere Saugnäpfe können sich auch unterhalb des Mittenträgers 3 befinden. Eine Mess- und Trenn- Einrichtung 10 ist an dem mittigen Greifarm 5 so angeordnet, dass die Vorrichtung die Kante der Platte 2 umgreift.

In Figur 2 ist ein Detail eines Saugnapfes 7 dargestellt. Der Saugnapf 7 wird mit einer winkligen Verbindung 6 mit dem Greifarm 5 verbunden. In dem dargestellten Beispiel wird ein Winkelblech mit dem Greifarm verschraubt. In einer alternativen Ausführungsform ist es möglich, anstatt einer fixen Verschraubung eine Schwalbenschwanzführung in einer Nut 9 vorzusehen, damit der Saugnapf entlang der Längserstreckung des Greifarmes verschiebbar angeordnet werden kann. Aber auch in der verschraubten Ausführungsform ist es möglich durch regelmäßige Schrauböffnungen entlang des Greifarmes das Versetzen des Saugnapfes auf einfache Art und Weise zu ermöglichen. Der Saugnapf ist verbunden mit einem Nippel 8, der eine Anbindung an das Vakuumsystem darstellt. Der Nippel 8 wird über einen Schlauch mit dem zentralen Vakuumsystem verbunden. Vakuumschlauchverbindungen sind in den beiden Zeichnungen nicht dargestellt.

Die Transportvorrichtung 1 wird aus Aluminiumprofilen hergestellt, wobei auch Guss-und/oder verschweißte Stahlkonstruktionen zur Herstellung geeignet sind.

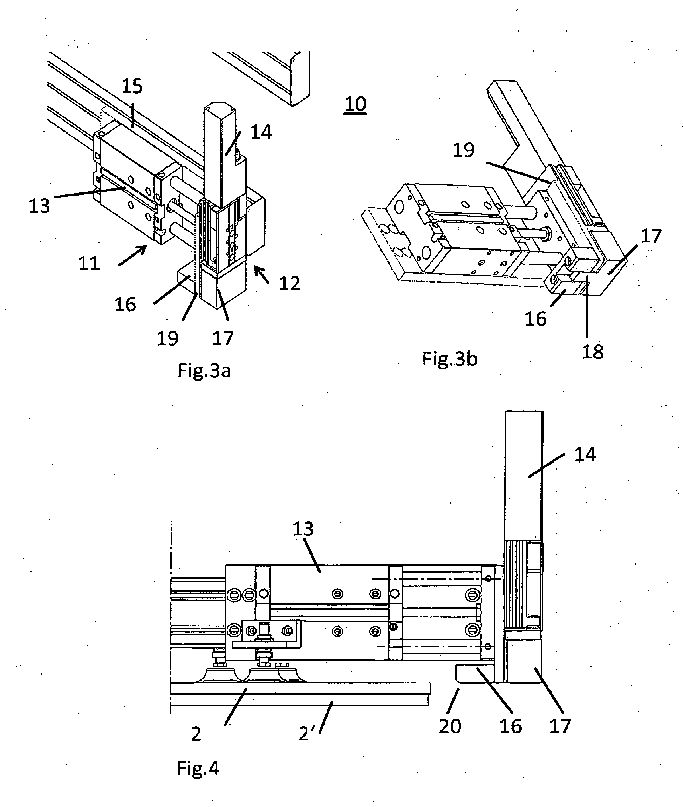

Die Figuren 3a und 3b zeigen ein Detail der Mess-und Trennvorrichtung 10. Die Mess-und Trennvorrichtung 10 weist eine Montageplatte 15 auf, auf der ein erster Schlitten 11 montiert ist, der eine Endplatte 19 mit einer ersten Backe 16 bewegt. An der Endplatte 19 ist ein zweiter Schlitten 12 angeflanscht. Der zweite Schlitten 12 bewegt eine zweite Backe 17 senkrecht zu der Bewegung des ersten Schlittens.

Angetrieben wird der erste Schlitten 11 über einen ersten Aktuator 13, der zweite Schlitten 12 über einen zweiten Aktuator 14. Die Betätigung dieser Schlitten kann pneumatisch, hydraulisch, elektrisch oder elektromechanisch und in jeder Kombination erfolgen. Die Steuerung der Aktuatoren ist dabei normalerweise mit der Steuerung des Transportsystems gekoppelt, in dem auch die zu erzeugenden Messwerte verarbeitet werden. In einer alternativen Ausführungsform ist eine getrennte Steuerung der Transportvorrichtung und ihrer Mess-und Trennvorrichtung möglich.

In der Figur 3b ist eine Sicht von unten auf die Mess-und Trennvorrichtung zu sehen. Die erste Backe 16 des ersten Schlittens 11 weist eine Aussparung auf, in die ein Trennschieber 18 der von der zweiten Backe 17 gebildet wird, in der Ruhestellung aufgenommen wird.

Die Ruhestellung der Messe-und Trennvorrichtung 10 ist in Figur 4 nochmals dargestellt. Dabei ist zu erkennen, dass der erste Schlitten 11 ausgefahren ist, so dass sich der angeflanschte zweite Schlitten 12 außerhalb des Randes der Platte befindet. Der zweite Schlitten 12 befindet sich in einem Zustand, in dem der Trennschieber 18 vollständig in der ersten Backe 16 verschwindet. In diesem Ruhezustand berührt die Mess-und Trennvorrichtung die zu transportierende Platte nicht.

Die erste Backe 16 weist in Richtung der Platte 2 eine Fase oder Rampe 20 auf. Diese Rampe 20 dient dazu, dass sich die erste Backe 16 nicht mit der Kante der Platte 2 verkantet, sondern in einfacher Art und Weise darüber verschiebbar ist.

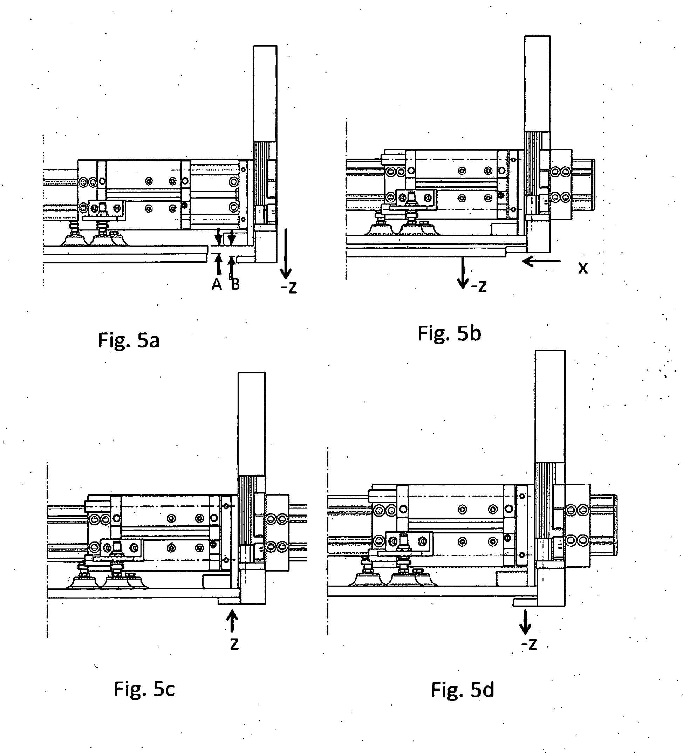

Figur 5 zeigt den Prozessschritt, in dem der erste Schlitten 11 nicht bewegt wird, aber der zweite Schlitten 12 seine zweite Backe 17 in negativer Z Richtung verschiebt. Die Verschiebung ist dabei so, dass sie einen Spalt B zwischen der ersten Backe 16 und der zweiten Backe mit dem Trennschieber 18 öffnet, wobei der Spalt B größer als die Dicke der Platte A ist aber kleiner als zweimal die Dicke der Platte A ist. Nach dieser Bewegung liegt der Trennschieber 18 ungefähr in der Ebene einer potenziell anhaftenden zweiten Platte 2'. Im Prozessschritt der Figur 5b fährt der erste Schlitten 11 in Richtung x. Dadurch bewegt sich zum einen die erste Backe 16 mit ihrer angefasten Stirnseite auf die Kante der Platte 2 zu und schiebt sich darüber. Zudem bewegt sich der Trennschieber 18 gegen die Stirnseite der Platte 2'. Die Platte 2' wird in x- Richtung in Relation zur aufgenommenen Platte 2 verschoben. Um den Trennprozess zu unterstützen ist es sinnvoll, die Transportvorrichtung mit einem Vibrator zu versehen, um durch die Rüttelbewegung die anhaftende Platte 2' zu lösen.

Im Prozessschritt der Figur 5c wird der Erfolg des Trennprozesses überprüft, indem die Dicke der Platte 2 gemessen wird. Dazu fährt der zweite Schlitten 12 in z-Richtung bis der Trennschieber 18 an der Platte anliegt. Damit wird aus der ersten Backe 16 und der zweiten Backe 17 mit dem Trennschieber 18 eine Messlehre, die die Dicke der Platte 2 bestimmen kann. Im idealen Fall ergibt die Messung eine Dicke der Platte in der Größe von A, wonach die Steuerung feststellen kann, dass nur eine Platte aufgenommen wurde. Danach erfolgt im Prozessschritt der Figur 5d, dass der zweite Schlitten 12 in minus z-Richtung verschoben wird, der erste Schlitten in minus x-Richtung, so dass die Mess-und Trennvorrichtung 10 sich wieder außerhalb der Platte 2 befindet.

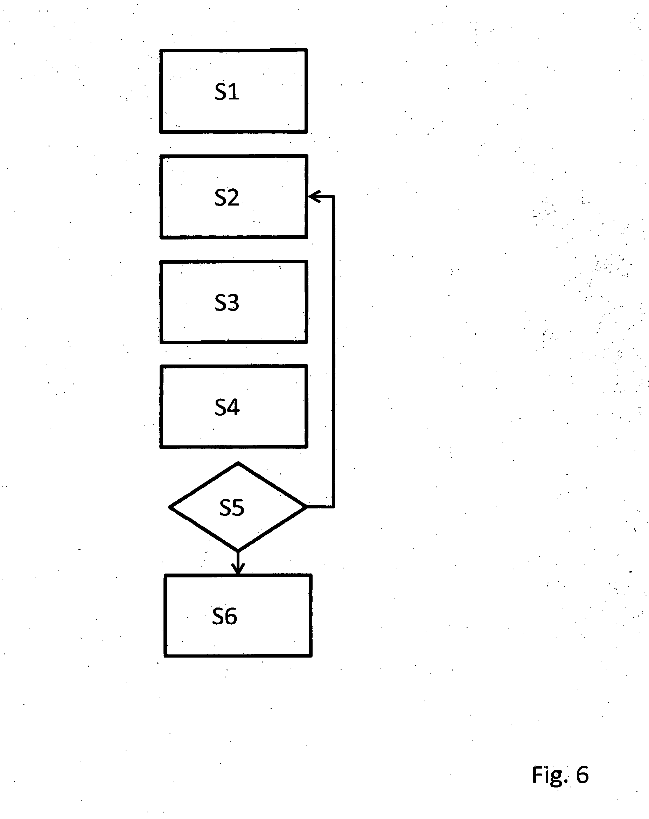

In Figur 6 wird das Steuerungsverfahren kurz skizziert. In einem Schritt S1 wird das Ansaugen der Platten, bestenfalls der einzelnen Platte über die Saugnäpfe veranlasst. Während dieses Schrittes befindet sich die Mess-und Trennvorrichtung im Ruhezustand. In einem nächsten Schritt S2 werden die vertikalen und horizontalen Bewegungen des ersten und des zweiten Schlittens durchgeführt, um in die Trennposition zu kommen. In einem dritten Schritt S 3 wird eine anhaftende Platte abgestreift. Im Prozessschritt S 4 veranlasst die Steuerung die Backen der Mess-und Trennvorrichtung die Platte 2 zu umschließen und die Dicke zu messen. Im Schritt S 5 entscheidet die Steuerung, ob die Dicke der gemessenen Platte einer einzelnen Platte entspricht oder ob es sich noch um mehrere aufgenommene Platten handelt. Wenn die Steuerung nur eine Platte detektiert, wird der Schritt S6 ausgeführt und die Platte der weiteren Verwendung im Herstellungsprozess übergeben. Führt die Messung zum Ergebnis, dass mehrere Platten vorhanden sind, weil die Dicke größer als die Solldicke A ist, springt die Steuerung zum Schritt S2 zurück, in dem die vertikalen und horizontalen Bewegungen des Schlittens so ausgeführt werden, dass das Mess-und Trennmittel wieder in die Position gefahren wird, in dem der Trennschritt S3 erfolgen kann.

Die Steuerung für das Verfahren kann dabei die Schrittfolgen vom Messen der Dicke zum erneuten Trennen der Platten immer wieder durchlaufen. Es ist aber sicher sinnvoll, die Anzahl der Kreisläufe zu begrenzen, da die Wahrscheinlichkeit sinkt, dass noch mehr Platten vorhanden sind und es sich eher um einen Messfehler handeln wird oder ein überschreiten der Solldicke der einzelnen Platte.

### Bezugszeichenliste

- 1: Transportvorrichtung
- 2: Platte
- 3: Mittenträger
- 4: Adapter
- 5: Greifarme
- 6: Verbindung
- 7: Saugnapf
- 8: Nippel
- 9: Nut
- 10: Mess- und Trennvorrichtung
- 11: erster Schlitten
- 12: zweiter Schlitten
- 13: erster Aktuator
- 14: zweiter Aktuator
- 15: Montageplatte
- 16: erste Backe
- 17: zweite Backe
- 18: Trennschieber
- 19: Endplatte
- 20: Rampe

## Patentansprüche

1. Vorrichtung zum Transport von plattenförmigen Gütern bestehend aus Greifarmen (4), wobei die Greifarme (4) jeweils mindestens einen mit Unterdruck zu beaufschlagenden Saugnapf (7) tragen **dadurch gekennzeichnet, dass** an mindestens einem Greifarm eine Mess-und Trennvorrichtung (10) zum Abstreifen von anhaftenden Platten von der zu transportierenden Platte angebracht ist, wobei die Mess-und Trennvorrichtung (10) über einen ersten und einen zweiten Schlitten verschiebbare Backen (16,17) als Messzangen aufweist und die zweite Backe (17) einen Trennschieber (18) besitzt, der im Ruhezustand in eine Ausnehmung der ersten Backe (16) eingreift.

2. Vorrichtung nach Anspruch 1, **dadurch gekennzeichnet, dass** mehrere Saugnäpfe an jeweils einem Greifarm angebracht sind.

3. Vorrichtung nach Anspruch 1 oder 2 , **dadurch gekennzeichnet, dass** die Saugnäpfe verschiebbar entlang der Greifarme angebracht sind.

4. Vorrichtung nach Anspruch 1, **dadurch gekennzeichnet, dass** die Mess- und Trennvorrichtung (10) an einem mittig angebrachten Greifarm angebracht ist.

5. Verfahren zum Transport von plattenförmigen Gütern unter Verwendung einer Vorrichtung nach einem der Ansprüche 1 bis 4, **dadurch gekennzeichnet, dass** folgende Schritte durchlaufen werden
- Ansaugen einer oder mehrerer Platten (2, 2') während sich die Mess- und Trennvorrichtung im Ruhezustand befindet,
- Vertikale Bewegung des zweiten Schlittens unter Öffnung eines Abstandes (B) zwischen der ersten Backe (16) und der zweiten Backe (17)
- Horizontales Verfahren des ersten Schlittens in Richtung der Platten (2,2')
- Abstreifen der anhaftenden Platte (2')
- Vertikales Schließen des Abstandes zwischen der ersten und der zweiten Backe um die Platte (2)
- Messung der Dicke (A) der Platte (2)

6. Verfahren nach Anspruch 5 **dadurch gekennzeichnet, dass** das Abstreifen der anhaftenden Platte durch eine Rüttelbewegung der Vorrichtung unterstützt wird.

7. Verfahren nach Anspruch 5 **dadurch gekennzeichnet, dass** nach der Messung der Plattendicke eine Entscheidung getroffen wird, ob die Platte weiter transportiert oder in einem Zwischenspeicher abgelegt wird.

8. Verfahren nach Anspruch 5 **dadurch gekennzeichnet, dass** nach Messung der Plattendicke, die Bewegungen der Schlitten erneut durchgeführt werden, sollte die Messung eine über dem Schwellwert (A) liegende Dicke ergeben.

## Claims

1. Apparatus for transporting panel-form articles, comprising gripping arms (4), wherein the gripping arms (4) each bear at least one suction cup (7) which can be subjected to negative pressure, **characterized in that** a measuring and separating apparatus (10) for stripping off adhering panels from the panel which is to be transported is fitted on at least one gripping arm, wherein the measuring and separating apparatus (10) has jaws (16, 17), which can be displaced via a first and a second carriage, forming measuring clamps, and the second jaw (17) has a separating slide (18) which, in the rest state, engages in a recess of the first jaw (16).

2. Apparatus according to Claim 1, **characterized in that** a plurality of suction cups are fitted on a respective gripping arm.

3. Apparatus according to Claim 1 or 2, **characterized in that** the suction cups are fitted in a displaceable manner along the gripping arms.

4. Apparatus according to Claim 1, **characterized in that** the measuring and separating apparatus (10) is fitted on a centrally fitted gripping arm.

5. Method of transporting panel-form articles using an apparatus according to one of Claims 1 to 4, **characterized in that** the following steps are implemented:
- one or more panels (2, 2') are attached by suction while the measuring and separating apparatus is located in the rest state,
- the second carriage is moved vertically, while at the same time a distance (B) is opened up between the first jaw (16) and the second jaw (17),
- the first carriage is displaced horizontal in the direction of the panels (2, 2'),
- the adhering panel (2') is stripped off,
- the distance between the first and the second jaws is closed up vertically around the panel (2),
- the thickness (A) of the panel (2) is measured.

6. Method according to Claim 5, **characterized in that** the operation of stripping off the adhering panel is assisted by a vibratory movement of the apparatus.

7. Method according to Claim 5, **characterized in that**, once the panel thickness has been measured, a decision is taken as to whether the panel is transported onwards or is deposited in an interim store.

8. Method according to Claim 5, **characterized in that**, once the panel thickness has been measured, carriages are moved anew if the measurement shows a thickness above the threshold value (A).

## Revendications

1. Dispositif destiné au transport de produits en forme de plaque, constitué de bras de préhension (4), les bras de préhension (4) portant chacun au moins une ventouse (7) devant être sollicitée avec une dépression, **caractérisé en ce qu'**un dispositif de mesure et de séparation (10) pour détacher des plaques en adhérence de la plaque à transporter est monté sur au moins un bras de préhension, le dispositif de mesure et de séparation (10) présentant des mâchoires (16, 17) pouvant être déplacées sur un premier et un deuxième chariot en tant que mâchoires de mesure et la deuxième mâchoire (17) possédant un coulisseau de séparation (18) qui vient en prise dans l'état de repos dans un évidement de la première mâchoire (16).

2. Dispositif selon la revendication 1, **caractérisé en ce que** plusieurs ventouses sont montées à chaque fois sur un bras de préhension.

3. Dispositif selon la revendication 1 ou 2, **caractérisé en ce que** les ventouses sont montées de manière déplaçable le long des bras de préhension.

4. Dispositif selon la revendication 1, **caractérisé en ce que** le dispositif de mesure et de séparation (10) est monté sur un bras de préhension monté centralement.

5. Procédé destiné au transport de produits en forme de plaque en utilisant un dispositif selon l'une quelconque des revendications 1 à 4, **caractérisé en ce que** l'on effectue les étapes suivantes :
- aspiration d'une ou de plusieurs plaques (2, 2') tandis que le dispositif de mesure et de séparation se trouve à l'état de repos,
- déplacement vertical du deuxième chariot en ouvrant une distance (B) entre la première mâchoire (16) et la deuxième mâchoire (17),
- déplacement horizontal du premier chariot dans la direction des plaques (2, 2'),
- décollement de la plaque en adhérence (2'),
- fermeture verticale de la distance entre la première et la deuxième mâchoire autour de la plaque (2),
- mesure de l'épaisseur (A) de la plaque (2).

6. Procédé selon la revendication 5, **caractérisé en ce que** le décollement de la plaque en adhérence est favorisé par un mouvement de secouement du dispositif.

7. Procédé selon la revendication 5, **caractérisé en ce qu'**après la mesure de l'épaisseur de la plaque, on décide si la plaque doit être transportée davantage ou doit être déposée dans un stockage intermédiaire.

8. Procédé selon la revendication 5, **caractérisé en ce qu'**après la mesure de l'épaisseur de la plaque, les déplacements des chariots sont renouvelés si la mesure indique une épaisseur au-dessus de la valeur seuil (A).
